# EUROPEAN PATENT SPECIFICATION

(11) **EP 2 647 804 B1**
(45) Date of publication and mention of the grant of the patent: **03.08.2016**
(21) Application number: 12002519.2
(22) Date of filing: 06.04.2012
(51) Int. Cl.: F01N 13/00, F01N 3/08, F01N 3/10, F01N 3/20, F01N 3/28, F01N 3/031

(54) **Exhaust assembly**
Abgasbaugruppe
Ensemble d'échappement

(43) Date of publication of application: 09.10.2013
(73) Proprietor: Katcon Global S.A., 4940 Bascharage (LU)
(72) Inventor: Cavaiotti, Florian, 57100 Thionville (FR); Denis, Laurent, 54260 Longuyon (FR); Szybowski, Filip, 4964 Clemency (LU)
(74) Representative: McDonough, Jonathan

(56) References cited:
- EP-A2- 1 270 885
- JP-U- H0 327 822
- US-B2- 6 422 006

## Description

### BACKGROUND OF THE INVENTION

### 1. Field of the Invention

The present invention relates to an exhaust assembly for an engine of a vehicle.

### 2. Description of Related Art

Various exhaust devices are known in the exhaust industry for reducing emissions of a variety of harmful components present in an exhaust from an internal combustion engine. One type of exhaust device is disclosed in U.S. Patent No. 6,422,006 which includes a branch case and a junction case having flanges adjacent each other. The flanges are coupled together by a plurality of screws. The branch case defines an inlet passage for receiving the exhaust from the engine. The branch case further defines a first exhaust passage and a second exhaust passage adjacent to each other and spaced from the inlet passage such that the branch case has a skewed Y shaped configuration. The branch case includes a flow path switching valve for selectively directing the exhaust through the first exhaust passage and/or the second exhaust passage. The junction case includes a wall defining a bypass exhaust passage with the second exhaust passage extending through the bypass exhaust passage. HC adsorbent is disposed in the bypass exhaust passage. The junction case and the wall define a main exhaust passage therebetween with the first exhaust passage extending through main exhaust passage. Accordingly, the exhaust from the engine is directed through the first exhaust passage to avoid the HC adsorbent and/or the second exhaust passage to be exposed to the HC adsorbent.

The skewed Y shape configuration of the branch case and coupling of the branch case and the junction together with the flanges and screws increases the size of the exhaust device.
In addition, the fluid directed through the first exhaust passage and the second exhaust passage must bend through the branch case which can result in decrease fluid throughput through the exhaust device. Finally, the exhaust device does not an option for a treatment device integrated downstream of the HC adsorbent for further treatment of the fluid.

Therefore, there remains an opportunity to develop an exhaust assembly to selectively direct a fluid for treatment and/or bypassing treatment that has a compact structure, increases fluid throughput and has a downstream treatment option.

JPH0327822U discloses an exhaust assembly for directing a fluid comprising a housing defining a cavity along a longitudinal axis. Arranged within the cavity is an internal treatment device. The internal treatment device is spaced from the housing to define a bypass channel. Connected to the housing is a vane pivotable about a pivot axis between a first position in which fluid is directed through the internal treatment device and a second position in which the fluid is directed through the bypass channel.

### SUMMARY OF THE INVENTION

The present invention provides an exhaust assembly for directing a fluid comprising:
a housing defining a cavity along a longitudinal axis (L);
at least one internal treatment device disposed in said cavity of said housing the internal treatment device including a body spaced from said housing to define a bypass channel between said body and said housing said body defining an opening along said longitudinal axis (L);
a valve body mounted to said housing and coupled to said internal treatment device with said valve body defining a passageway along a central axis (C) generally parallel with said longitudinal axis (L) and having an inlet and a first outlet spaced from each other relative to said central axis (C) with said passageway extending between said inlet and said first outlet; and
a vane rotatable about a pivot axis (P)
characterised in that
the exhaust assembly further comprises a divider mounted to said valve body and extending into said passageway substantially parallel to the central axis (C) toward said inlet with said divider intersecting said passageway to define a second outlet of said valve body spaced apart from said inlet and said first outlet of said valve body relative to said central axis (C) with said second outlet disposed in said cavity of said housing;
said vain being coupled to said valve body and being rotatable about the pivot axis (P) between a first position blocking said second outlet of said valve body for directing the fluid through said first outlet into said opening and a second position blocking said first outlet of said valve body for directing the fluid through said second outlet into said bypass channel;
the first outlet of said valve body being disposed in said cavity of said housing.

Preferably said central axis (C) and said longitudinal axis (L) are coaxial.

Preferably said valve body includes an outer wall extending between said inlet and said first outlet and further defining said passageway with said outer wall defining an aperture fluidly connected to said passageway and including an edge further defining said aperture wherein at least a portion of said edge is angled relative to said central axis (C) towards said inlet for further directing fluid through said second outlet.

Preferably said divider extends along said edge to further direct the fluid out said second outlet.

Preferably said vane is mounted to said divider.

Preferably said divider includes a first portion mounted to said valve body and extending angularly to said central axis (C) toward said inlet and a second portion mounted to said first portion and extending into said passageway substantially parallel to said central axis (C) to a distal end with said vane rotatably coupled to said distal end about said pivot axis (P) transverse to said central axis (C).

Preferably said housing includes a first end defining a first hole and a second end defining a second hole spaced from each other along said longitudinal axis (L) with said valve body disposed in said first hole and mounted to said first end and said bypass cooperating with said second outlet and said second hole for directing the fluid from said second outlet through said bypass and out said second hole.

Preferably said valve body is mounted to said body of said internal treatment device adjacent said opening such that said opening cooperates with said first outlet of said valve body for directing the fluid from said first outlet through said opening and out said second hole of said second end.

Preferably the exhaust assembly further includes a downstream treatment device mounted to said second end adjacent said second hole and spaced from said internal treatment device with said downstream treatment device including a casing defining an orifice along said longitudinal axis (L) for directing the fluid from said second hole through said orifice and out said orifice.

Preferably the exhaust assembly further includes
a second exhaust assembly for directing a fluid comprising
a second housing defining a second cavity along a second longitudinal axis (L');
at least one second internal treatment device disposed in said second cavity of said second housing;
a second valve body mounted to said second housing and coupled to said second internal treatment device with said second valve body defining a second passageway along a second central axis (C') generally parallel with said second longitudinal axis (L')and having a second inlet and a third outlet spaced from each other relative to said second central axis (C') with said second passageway extending between said second inlet and said third outlet and said third outlet disposed in said second cavity of said second housing;
a second divider mounted to said second valve body and extending into said second passageway toward said second inlet with said second divider intersecting said second passageway to define a fourth outlet spaced from said second inlet and said third outlet relative to said second central axis (C') with said fourth outlet disposed in said second cavity of said second housing; and,
a second vane coupled to said second valve body and rotatable about a second pivot axis (P') between a third position blocking said fourth outlet for directing the fluid through said third outlet and a fourth position blocking said third outlet for directing the fluid through said fourth outlet ;
wherein said second valve body of said second exhaust assembly is coupled to one of said second end of said exhaust assembly and said downstream treatment device of said exhaust assembly for directing the fluid from said exhaust assembly through said second exhaust assembly.

Preferably said internal treatment device has an operating temperature range of from about 150C to about 400C to define a first range of operation ;
the exhaust assembly further comprising at least one downstream treatment device mounted to said housing spaced from said valve body and coupled to said second outlet and said internal treatment device with said downstream treatment device having an operating temperature range of from about 300C to about 900C to define a second range of operation.

Preferably said internal treatment device is a diesel oxidising catalyst and said downstream treatment device is a three way catalyst with said vane at said first position blocking said second outlet for directing the fluid from said first outlet through said diesel oxidising catalyst and out said three way catalyst wherein said exhaust assembly is at said first range of operation.

Preferably said internal treatment device is a diesel oxidising catalyst and said downstream treatment device is a three way catalyst with said vane at said second position blocking said first outlet for directing the fluid from said second outlet bypassing said diesel oxidising catalyst and out said three way catalyst wherein said exhaust assembly is at said second range of operation.

Therefore, the exhaust assembly is designed to be compact while selectively directing the fluid to undergo treatment or to bypass treatment. For example, the central axis of the valve body and the longitudinal axis of the housing are parallel to form a parallel orientation and additionally, the valve body and the longitudinal axis of the housing are coaxial to form a coaxial orientation. The parallel orientation and the coaxial orientation formed between the valve body and the housing result in the exhaust assembly having a compact structure and increased throughput. In addition, the valve body can direct the fluid to the internal treatment device having the first range of operation of the downstream treatment device having the second range of operation. Furthermore, the valve body can direct fluid to the internal baffle device or directly out the exhaust assembly.

### BRIEF DESCRIPTION OF THE DRAWINGS

Advantages of the current invention will be readily appreciated, as the same becomes better understood by reference to the following detailed description, when considered in connection with the accompanying drawings.
Figure 1 is a perspective view of an exhaust assembly in accordance with the subject invention.
Figure 2 is an exploded perspective view of the exhaust assembly.
Figure 3 is a fragmented perspective view of a valve body in accordance with the subject invention.
Figure 4 is a partially cross sectional side view of the exhaust assembly having the vane in a first position.
Figure 5 is a partially cross sectional side view of the exhaust assembly having the vane in a second position.
Figure 6 is a partially cross sectional and partially in phantom side view of the exhaust assembly having an actuation device coupled to the vane.
Figure 7 is a partially cross sectional side view of a pair of exhaust assemblies.
Figure 8 is a partially cross sectional side view of an exhaust assembly not according to the invention with the vane in a first position.
Figure 9 is a partially cross sectional side view of an exhaust assembly not according to the invention with the vane in a second position.
Figure 10 is a partially cross sectional side view of an exhaust assembly not according to the invention with the vane in an intermediate position.

### DETAILED DESCRIPTION OF THE INVENTION

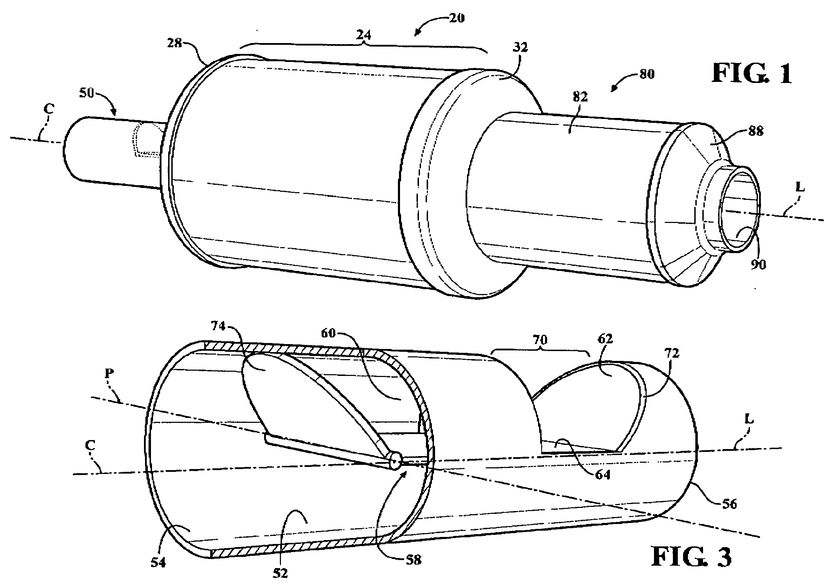

Referring to the figures, wherein like numerals indicate like or corresponding parts throughout the several views, an exhaust assembly 20 for directing a fluid is generally shown in Figures 1, 2 and 4. Generally, the exhaust assembly 20 is included in an exhaust system for an engine of a vehicle. However, it is to be appreciated that the exhaust assembly 20 can be for any engine of such as, for example, all-terrain vehicles, tractors, generators, lawn equipment, and the like.

The fluid is typically a gas but can be any other suitable fluid. For example, the fluid is typically the exhaust gas generated by combustion of a fuel within the engine of a vehicle. The fuel can be a hydrocarbon fuel, and/or any other suitable fuel. For example, the hydrocarbon fuel can be gasoline fuel, diesel fuel, compressed natural gas and/or any other suitable hydrocarbon fuel. In one embodiment, the exhaust assembly 20 is configured to reduce emissions of a variety of harmful components present in the fluid by exposing the fluid to an emission treatment substrate 22. The emission treatment substrate 22 is shown in the figures with a relatively large honeycomb structure for illustrative purposes. The emission treatment substrate 22 can be an oxidizing catalyst, a particulate filter and/or any other suitable emission treatment The oxidizing catalyst can be a diesel oxidizing catalyst, a three-way catalyst, and/or any other suitable oxidizing catalyst. The particulate filter can be a diesel particulate filter and/or any other suitable particulate filter. The harmful components include, for example, hydrocarbons (HC), carbon monoxide (CO), nitrogen oxides (NOx) and particulate matter. Accordingly, the oxidizing catalyst, for example, can convert hydrocarbons (HC), carbon monoxide (CO), and/or nitrogen oxides (NOx) to less-harmful components and the particulate filter, for example, can trap particulate matter.

The exhaust assembly 20 includes a housing 24 defining a cavity 26 along a longitudinal axis L.

In certain embodiments, the housing 24 has a cylindrical configuration. However, it is to be appreciated that the housing 24 may have other configurations, such as rectangular, square, oval, etc. The housing 24 includes a first end 28 defining a first hole 30 and a second end 32 defining a second hole 34 spaced from each other along the longitudinal axis L. The first end 28 and the second end 32 can have a frusto-conical configuration extending outward from a center portion of the housing 24.

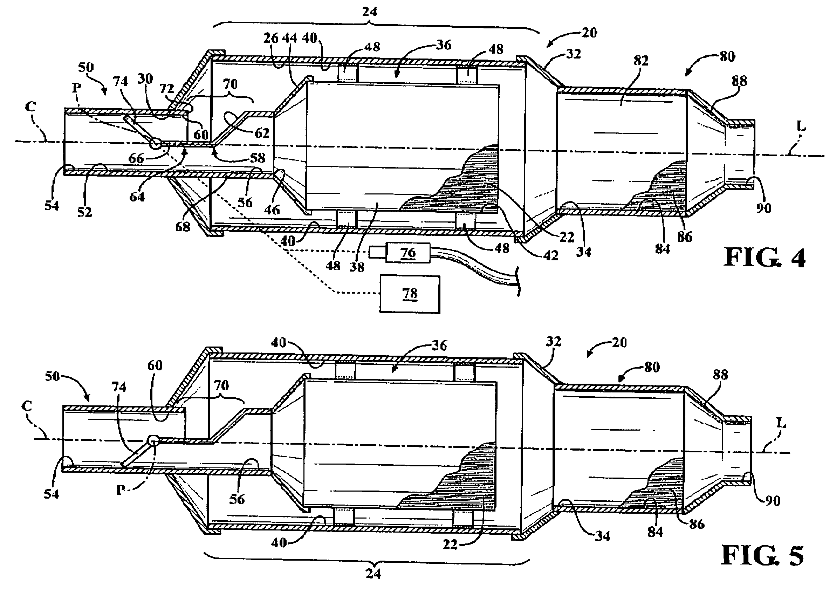

The exhaust assembly 20 includes at least one internal treatment device 36 disposed in the cavity 26 of the housing 24. The internal treatment device 36 includes a body 38 spaced from the housing 24 to define a bypass channel 40 between the body 38 and the housing 24 (see Figure 4). The bypass channel 40 extends from the first end 28 of the housing 24 to the second end 32 of the housing 24. The body 38 of the internal treatment device 36 defines an opening 42 along the longitudinal axis L. The emission treatment substrate 22, as discussed above, is disposed in the opening 42 of the internal treatment device 36 for reducing emissions of the variety of harmful components present in the fluid.

The body 38 of the internal treatment device 36 can include a cover 44 defining a cover hole 46. The cover 44 is adjacent the opening 42 of the internal treatment device 36 and the first end 28 of the housing 24. More specifically, the cover hole 46 is aligned with the opening 42 of the internal treatment device 36 such that the opening 42 is accessible for receiving the fluid. It is to be appreciated that the cover 44 is optional and be any suitable configuration.

The internal treatment device 36 is supported in the cavity 26 of the housing 24 to maintain flow of the fluid through the bypass channel 40 by any support apparatus known in the exhaust industry. In certain embodiments, a plurality of spacers 48 are disposed in the bypass channel 40 with the spacers 48 abutting the body 38 of the internal treatment device 36 and the housing 24 with the spacers 48 having a U-shaped configuration to permit the fluid to flow through the bypass channel 40. It is to be appreciated that the spacers 48 are optional and be any suitable configuration.

Also referring to Figures 3, the exhaust assembly 20 includes a valve body 50 mounted to the housing 24 and coupled to the internal treatment device 36. The valve body 50 is disposed in the first hole 30 of the first end 28 and mounted to the first end 28 of the housing 24. The valve body 50 is further mounted to the body 38 of the internal treatment device 36 adjacent the opening 42 of the internal treatment device 36. In certain embodiments, the valve body 50 has a cylindrical configuration. However, it is to be appreciated that the valve body 50 may have other configurations, such as rectangular, square, oval, etc. The valve body 50 defines a passageway 52 along a central axis C generally parallel with the longitudinal axis L to form a parallel orientation between the valve body 50 and the housing 24. The central axis C and the longitudinal axis L can be coaxial to form a coaxial orientation between the valve body 50 and the housing 24. The parallel orientation and coaxial orientation formed between the valve body 50 and the housing 24 result in the exhaust assembly 20 having a compact structure and increased fluid throughput

The valve body 50 has an inlet 54 and a first outlet 56 spaced from each other relative to the central axis C with the passageway 52 extending between the inlet 54 and the first outlet 56.

The inlet 54 of the valve body 50 is coupled to the engine to receive the fluid generated during combustion. The inlet 54 can direct the fluid through the passageway 52 to the first outlet 56.

The first outlet 56 of the valve body 50 is disposed in the cavity 26 of the housing 24 and mounted to the cover 44 of the internal treatment device 36. The first outlet 56 aligns with the cover hole 46 of the cover 44. The opening 42 of the internal treatment device 36 cooperates with the first outlet 56 of the valve body 50 and the second hole 34 of the housing 24 for directing the fluid from the first outlet 56 through the opening 42 and out the second hole 34. The exhaust assembly 20 includes a divider 58 mounted to the valve body 50 and extending into the passageway 52 toward the inlet 54. The divider 58 intersects the passageway 52 to define a second outlet 60 spaced from the inlet 54 and the first outlet 56 relative to the central axis C such that the valve body 50 has the inlet 54, the first outlet 56 and the second outlet 60 spaced from each other along the central axis C. The divider 58 includes a first portion 62 mounted to the valve body 50 and extending angularly to the central axis C toward the inlet 54. The divider 58 further includes a second portion 64 mounted to the first portion 62 and extending into the passageway 52 substantially parallel to the central axis C to a distal end 66. The second outlet 60 is also disposed in the cavity 26 of the housing 24 and aligns with the bypass channel 40. The inlet 54 can direct the fluid through the passageway 52 to the second outlet 60. The bypass channel 40 cooperates with the second outlet 60 of the valve body 50 and the second hole 34 of the housing 24 for directing the fluid from the second outlet 60 through the bypass channel 40 and out the second hole 34.

The valve body 50 includes an outer wall 68 extending between the inlet 54 and the first outlet 56 and further defining the passageway 52. In certain embodiments, the outer wall 68 has a cylindrical configuration. However, it is to be appreciated that the outer wall 68 may have other configurations, such as rectangular, square, oval, etc. The outer wall 68 defines an aperture 70 fluidly connected to the passageway 52. The outer wall 68 includes an edge 72 further defining the aperture 70 wherein at least a portion of the edge 72 is angled relative to the central axis C towards the inlet 54 for further directing fluid through the second outlet 60. The divider 58 extends along the edge 72 to further direct the fluid out the second outlet 60.

The exhaust assembly 20 includes a vane 74 coupled to the valve body 50 and rotatable about a pivot axis P between a first position blocking the second outlet 60 of the valve body 50 for directing the fluid through the first outlet 56 of the valve body 50 and a second position blocking the first outlet 56 for directing the fluid through the second outlet 60. The vane 74 is shown in the first position in Figure 4 and in the second position in Figure 5. The vane 74 is mounted to the divider 58 and rotatably coupled to the distal end 66 of the second portion 64 about the pivot axis P transverse to the central axis C. However, it is to be appreciated that the vane 74 can be mounted any part of the valve body 50 for directing the fluid.

The vane 74 can be actuated between the first position and the second position by any suitable device. For example, the vane 74 can be actuated by a cable 76, such as a motor, and the like. Alternatively, for example, the vane 74 can be actuated by an electrical actuator 78, and the like. Alternatively, for example, the vane 74 can be actuated by a pneumatic actuator, and the like. The exhaust assembly 20 can further include a downstream treatment device 80 mounted to the second end 32 of the housing 24 adjacent the second hole 34 of the second end 32. In one embodiment, the downstream treatment device 80 has a cylindrical configuration. It is to be appreciated that the downstream treatment device 80 is optional and may have other configurations, such as rectangular, square, oval, etc. The downstream treatment device 80 includes a casing 82 defining an orifice 84 along the longitudinal axis L for directing the fluid from the second hole 34 of the housing 24 through the orifice 84 and out the orifice 84. Another emission treatment substrate 86, similar to the emission treatment substrate 22 of the internal treatment device 36 discussed above, is disposed in the orifice 84 of the downstream treatment device 80 for reducing emissions of the variety of harmful components present in the fluid. The downstream treatment device 80 is coupled to the second outlet 60 of the valve body 50 and the opening 42 the internal treatment device 36 for exposing the fluid to the emission treatment substrate 86 of the downstream treatment device 80. The downstream treatment device 80 is spaced from the internal treatment device 36 to fluidly connect the internal treatment device 36 and the bypass channel 40 to the downstream treatment device 80. More specifically, the opening 42 of the internal treatment device 36 and the bypass channel 40 fluidly connect with the orifice 84 of the downstream treatment device 80 through the second hole 34 of the housing 24.

The casing 82 of the downstream treatment device 80 can include a cap 88 defining a cap hole 90. The cap 88 is adjacent the orifice 84 of the downstream treatment device 80 and spaced from the second end 32 housing 24. More specifically, the cap hole 90 is aligned with the orifice 84 such that the fluid can flow from the second hole 82 of the housing 24through the orifice 84 of the downstream treatment device 80 and then out the cap hole 90 of the cap 88. It is to be appreciated that the cap 88 is optional and be any suitable configuration.

As shown in Figure 4, when the vane 54 is in the first position, the fluid flowing from the engine to the inlet 54 of the valve body 50 is directed through the passageway 52 of the valve body 50 along the central axis C to the first outlet 56 of the valve body 50. The fluid from the first outlet 56 is directed through the cover hole 46 of the cover 44, through the opening 42 of the internal treatment device 36 for exposure to the emission treatment substrate 22 of the internal treatment device 36, and then out the second hole 34 of the housing 24. If the exhaust assembly 20 includes the downstream treatment device 80, the fluid from the second hole 34 is directed through the orifice 84 of the downstream treatment device 80 for exposure to the emission treatment substrate 86 of the downstream treatment device 80 and then out the cap hole 90 of the cap 88.

As shown in Figure 5, when the vane 74 is in the second position, the fluid flowing from the engine to the inlet 54 of the valve body 50 is directed through the passageway 52 of the valve body 50 along the central axis C and then through the aperture 70 to the second outlet 60 of the valve body 50. The fluid from the second outlet 60 is directed through the bypass channel 40 for bypassing the emission treatment substrate 22 of the internal treatment device 36 and then out the second hole 34 of the housing 24. If the exhaust assembly 20 includes the downstream treatment device 80, the fluid from the second hole 34 is directed through the orifice 84 of the downstream treatment device 80 for exposure to the emission treatment substrate 86 of the downstream treatment device 80 and then out the cap hole 90 of the cap 88.

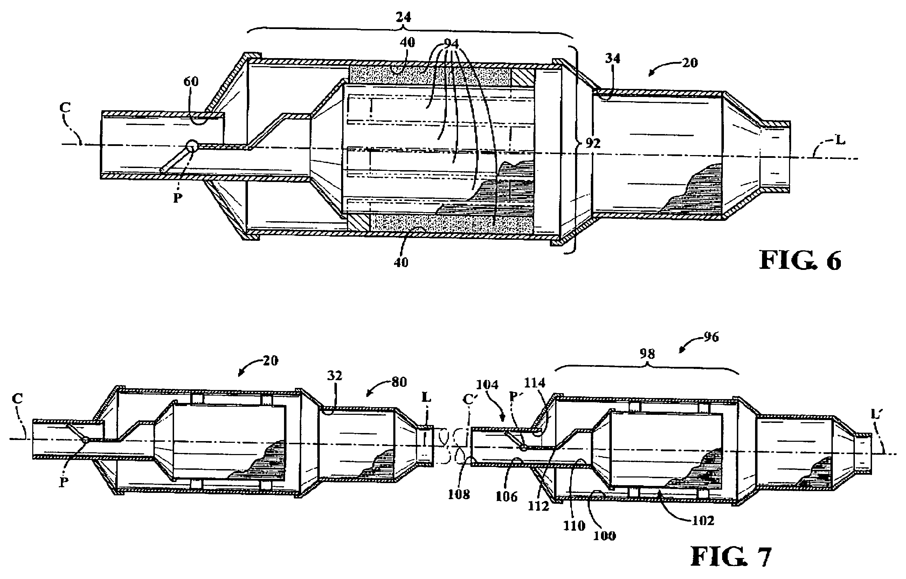

Turning to Figure 6, a peripheral treatment device 92 is disposed in the bypass channel 40. The peripheral treatment device 92 includes another emission treatment substrate 94, similar to the emission treatment substrate 22 of the internal treatment device 36 discussed above. As such, the fluid directed by the bypass channel 40 from the second outlet 60 of the valve body 50 to the second hole 34 of the housing 24 is exposed to the emission treatment substrate 94 of the peripheral treatment device 92 for reducing emissions of the variety of harmful components present in the fluid. It is to be appreciated that the peripheral treatment device 92 is optional.

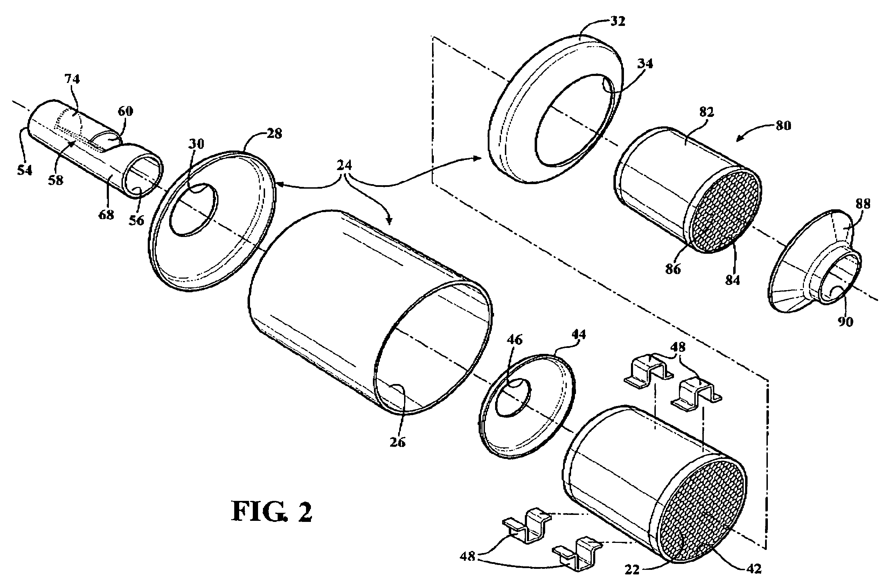

In another embodiment, turning back to Figures 2 and 4, the fuel can be selectively chosen from diesel and compressed natural gas. The fluid generated during combustion of diesel is a diesel exhaust fluid having a fluid temperature of from about 150 °C to about 400 °C. The fluid generated during combustion of compressed natural gas is a CNG exhaust fluid having a fluid operating temperature of from about 300 °C to about 900 °C. Each oxidizing catalyst has an operating temperature range to effectively convert the variety of harmful components present in the fluid to the less-harmful components. Temperatures above the operating temperature range of the oxidizing catalyst can destroy the oxidizing catalyst while temperatures below the operating temperature range can not effectively convert the variety of harmful components in the fluid. The exhaust assembly 20 is configured to reduce emissions of the variety of harmful components present in the diesel exhaust fluid and the CNG exhaust fluid.

The internal treatment device 36 has an operating temperature range of from about 150 °C to about 400 °C to define a first range of operation and is preferably a diesel oxidizing catalyst. The downstream treatment 80 device has an operating temperature of from about 300 °C to about 900 °C to define a second range of operation and is preferably a three-way catalyst. As such, when the fluid is the diesel exhaust fluid, the vane 74 is at the first position blocking the second outlet 60 of the valve body 50 for directing the fluid from the first outlet 56 of the valve body 50 through the diesel oxidizing catalyst and out the three-way catalyst wherein the exhaust assembly 20 is at the first range of operation. The fluid temperature of the diesel exhaust fluid is such that the diesel oxidizing catalyst can effectively convert the variety of harmful components present in the diesel exhaust fluid to the less-harmful components while not being destroyed. In addition, although the fluid temperature of the diesel exhaust fluid is below the operating temperature of the three-way catalyst, the three-way catalyst can still convert a portion the variety of harmful components present in the diesel exhaust fluid to the less-harmful components.

When the fluid is the CNG exhaust fluid, the vane 74 is at the second position blocking the first outlet 56 for directing the fluid from the second outlet 60 bypassing the diesel oxidizing catalyst and out the three-way catalyst wherein the exhaust assembly 20 is at the second range of operation. The CNG exhaust fluid is routed in this manner to avoid damage to the diesel oxidizing catalyst while still effectively converting the variety of harmful components present in the CNG exhaust fluid to the less-harmful components using the three-way catalyst.

In yet another embodiment, referring to Figure 7, the exhaust assembly further includes a second exhaust assembly 96 for directing the fluid. The second exhaust assembly 96 is similar to the exhaust assembly 20 so specific features of the second exhaust assembly 96 will not be discussed. The second exhaust assembly 96 includes a second housing 98 defining a second cavity 100 along a second longitudinal axis L'. The second exhaust assembly 96 includes at least one second internal treatment device 102 disposed in the second cavity 100 of the second housing 98.

The second exhaust assembly 96 includes a second valve body 104 mounted to the second housing 98 and coupled to the second internal treatment device 102. The second valve body 104 defines a second passageway 106 along a second central axis C' generally parallel with the second longitudinal axis L'. The valve body 104 has a second inlet 108 and a third outlet 110 spaced from each other relative to the second central axis C' with the passageway 106 extending between the second inlet 108 and the third outlet 110. The third outlet 110 is disposed in the second cavity 100 of the second housing 98.

The second exhaust assembly 96 includes a second divider 112 mounted to the second valve body 104 and extending into the second passageway 106 toward the second inlet 108. The second divider 112 intersects the second passageway 106 to define a fourth outlet 114 spaced from the second inlet 108 and the third outlet 110 relative to the second central axis C'. The fourth outlet 114 is disposed in the second cavity 100 of the second housing 98.

The second exhaust assembly 96 includes a second vane 116 coupled to the second valve body 104 and rotatable about a second pivot axis P' between a third position blocking the fourth outlet 114 for directing the fluid through the third outlet 110 and a fourth position blocking the third outlet 110 for directing the fluid through the fourth outlet 114.

The exhaust assembly 20 wherein the second valve body 104 of the second exhaust assembly 96 is coupled to one of the second end 32 of the exhaust assembly 20 and the downstream treatment device 80 of the exhaust assembly 20 for directing the fluid from the exhaust assembly 20 through the second exhaust assembly 96. In other words, the fluid from the engine is directed through the exhaust assembly 20 as discussed above, through the second exhaust assembly 96 in a manner similar to the exhaust assembly 20 as discussed above, and then out the second exhaust assembly 96 for reducing emissions of the variety of harmful components present in the fluid.

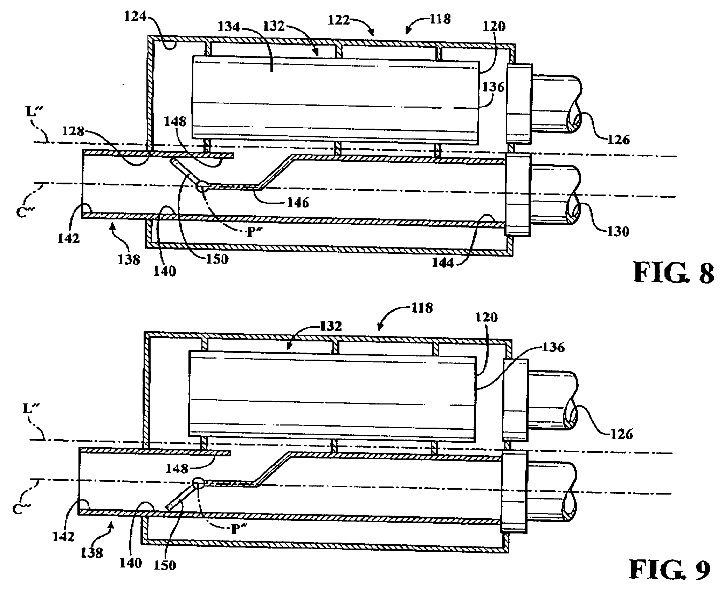

Referring to figure 8 an exhaust assembly not according to the invention 118 is configured to alter sounds associated with the fluid by exposing the fluid to a sound treatment substrate 120. The sound treatment substrate 120 can be a silencer, an acoustic baffle and/or any other sound treatment substrate. The sound results from combustion of the fuel within the engine of the vehicle. Accordingly, the silencer and/or the acoustic baffle, for example, can reduce the sounds associated with the fluid during combustion of the fuel in the engine.

Treatment of the fluid can result in decreased fluid throughput through the exhaust assembly 118. Therefore, the exhaust assembly 118 is adjustable to balance exposure to the sound treatment substrate 120 and fluid throughput. In addition, the sound is adjustable to meet noise regulations and vehicle manufacture characteristics.

The exhaust assembly 118 comprises a housing 122 defining a cavity 124 along a longitudinal axis L". In certain embodiments, the housing 122 has a rectangular configuration. However, it is to be appreciated that the housing 122 may have other configurations, such as cylindrical, square, oval, etc. The housing 122 defines a housing outlet 126 along the longitudinal axis L" and a housing inlet 128 opposite the housing outlet 126. In one embodiment, the housing 122 further defines a valve outlet 130 spaced from the housing outlet 126. More specifically, the valve outlet 130 is adjacent the housing outlet 126 and extends parallel to the longitudinal axis L".

The exhaust assembly 118 includes at least one internal baffling device 132 disposed in the cavity 124 of the housing 122. The internal baffling device 132 included a shell 134 defining a bore 136. The bore 136 extends through the shell parallel to the longitudinal axis L". The sound treatment substrate 120, as discussed above, is disposed in the bore 136 of the shell 134 for altering sounds associated with the fluid.

Also referring to Figure 3, the exhaust assembly 118 includes a valve body 138 mounted to the housing 122 and coupled to the internal baffling device 132. More specifically, the valve body 138 is disposed within the housing inlet 128 of the housing 122 and adjacent to the internal baffling device 132. The valve body 130 is similar to the valve body 130 discussed above so specific features of the valve body 130 will not be discussed. In certain embodiments, the valve body 130 has a cylindrical configuration. However, it is to be appreciated that the valve body 130 may have other configurations, such as rectangular, square, oval, etc. The valve body 130 defines a passageway 140 along a central axis C" generally parallel with the longitudinal axis L" to form a parallel orientation between the valve body 138 and the housing 122. The parallel orientation formed between the valve body 138 and the housing 122 results in the exhaust assembly 118 having a compact structure and increased fluid throughput.

The valve body 138 has an inlet 142 and a first outlet 144 spaced from each other relative to the central axis C" with the passageway 140 extending between the inlet 142 and the first outlet 144. The inlet 142 of the valve body 138 is coupled to the engine to receive the fluid generated during combustion. The inlet 54 can direct the fluid through the passageway 52 to the first outlet 144. The first outlet 144 is disposed in the cavity 124 of the housing 122 and aligns with the housing outlet 126 for directing the fluid from the first outlet 144 and out the housing outlet 126. Alternatively, the first outlet 144 of the valve body 138 aligns with the valve outlet 130 for directing the fluid from the first outlet 144 and out the valve outlet 130.

The exhaust assembly 118 includes a divider 146 mounted to the valve body 138 and extending into the passageway 140 toward the inlet 142. The divider 146 intersects the passageway 140 to define a second outlet 148 spaced from the inlet 142 and the first outlet 144 relative to the central axis C". The inlet 142 can direct the fluid through the passageway 140 to the second outlet 148. The second outlet 148 disposed in the cavity 124 of the housing 122. The bore 136 of the internal baffling device 132 cooperates with the second outlet 148 and aligns with the housing outlet 126 for directing the fluid from the second outlet 148 through the bore 136 and out the housing outlet 126.

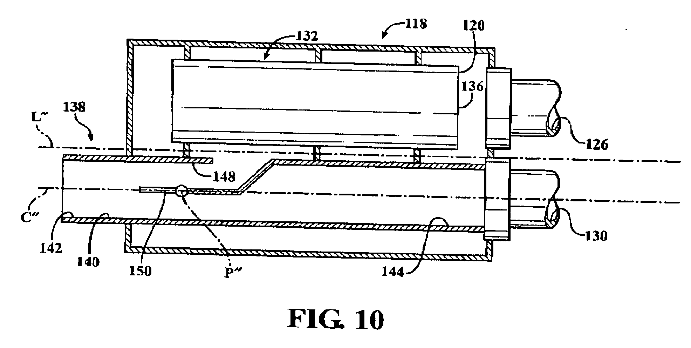

The exhaust assembly 118 includes a vane 150 coupled to the valve body 138 and rotatable about a pivot axis P" between a first position blocking the second outlet 148 of the valve body 138 for directing the fluid through the first outlet 144 of the valve body 138, a second position blocking the first outlet 144 for directing the fluid through the second outlet 148, and an intermediate position open to both the first outlet 144 and the second outlet 148 for directing the fluid through both the first outlet 144 and the second outlet 148. The vane 150 is shown in the first position in Figure 8, in the second position in Figure 9, and in the intermediate position in Figure 10.

Accordingly, the fluid from the engine is directed through the inlet 142 of the valve body 138 and then through the passageway 140 of the valve body 138 along the central axis C" to the first outlet 144 and/or the second outlet 148. The fluid flowing to the first outlet 144 is directed through the first outlet 144 and then out the housing outlet 126 or the valve outlet 130. The fluid flowing to the second outlet 148 is directed through the second outlet 148, through the bore 136 of the internal baffling device 132 for exposure to the sound treatment substrate 120 of the internal baffling device 132, and then out the housing outlet 126.

Referring only to Figure 8, when the vane 150 is in the first position, the fluid flowing from the engine to the inlet 142 of the valve body 138 is directed through the passageway 140 of the valve body 138, through the first outlet 144 of the valve body 138, and then out housing outlet 126 or the valve outlet 130. As a result, the fluid bypasses the sound treatment substrate 120 of the internal baffling device 132.

Referring to Figure 9, when the vane 150 is in the second position, the fluid flowing from the engine to the inlet 142 of the valve body 138 is directed through the passageway 140 of the valve body 138, through the second outlet 148 of the valve body 138, through the bore 136 of the internal baffling device 132, and then out housing outlet 126. As a result, the fluid is exposed to the sound treatment substrate 120 of the internal baffling device 132 for altering sounds associated with the fluid.

Referring to Figure 10, when the vane 150 is in the intermediate position, the fluid flowing from the engine to the inlet 142 of the valve body 138 is directed through the passageway 140 of the valve body 138 and then through both the first outlet 144 and the second outlet 148 of the valve body 138. The fluid from the first outlet 144 is directed out the housing outlet 126 or the valve outlet 130, and the fluid from the second outlet 148 is directed through the bore 136 of the internal baffling device 132, and then out housing outlet 126. As a result, only a portion of the fluid is exposed to the sound treatment substrate 120 of the internal baffling device 132 for balancing sound treatment substrate and fluid throughput through the exhaust assembly 118. It is to be appreciated that the intermediate position of the vane 150 can range anywhere about the pivot axis P" between the first position and the second position of the vane 150 for balancing sound treatment substrate and fluid throughput through the exhaust assembly 118.

The invention has been described in an illustrative manner, and it is to be understood that the terminology which has been used is intended to be in the nature of words of description rather than of limitation. As is now apparent to those skilled in the art, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. An exhaust assembly (20) for directing a fluid comprising:
a housing (24) defining a cavity (26) along a longitudinal axis (L);
at least one internal treatment device (36) disposed in said cavity (26) of said housing (24) the internal treatment device (36) including a body (38) spaced from said housing (24) to define a bypass channel (40) between said body (38) and said housing (24) said body (38) defining an opening (42) along said longitudinal axis (L);
a valve body (50) mounted to said housing (24) and coupled to said internal treatment device (36) with said valve body (50) defining a passageway (52) along a central axis (C) generally parallel with said longitudinal axis (L) and having an inlet (54) and a first outlet (56) spaced from each other relative to said central axis (C) with said passageway (52) extending between said inlet (54) and said first outlet (56); and
a vane (74) rotatable about a pivot axis (P)
**characterised in that**
the exhaust assembly further comprises a divider (58) mounted to said valve body (50) and extending into said passageway (52) substantially parallel to the central axis (C) toward said inlet (54) with said divider (58) intersecting said passageway (52) to define a second outlet (60) of said valve body (50) spaced apart from said inlet (54) and said first outlet (56) of said valve body (50) relative to said central axis (C) with said second outlet (60) disposed in said cavity (26) of said housing (24);
said vane (74) being coupled to said valve body (50) and being rotatable about the pivot axis (P) between a first position blocking said second outlet (60) of said valve body (50) for directing the fluid through said first outlet (56) into said opening (42) and a second position blocking said first outlet (56) of said valve body (50) for directing the fluid through said second outlet (60) into said bypass channel (40);
the first outlet (56) of said valve body (50) being disposed in said cavity (26) of said housing (24).

2. An exhaust assembly (20) as claimed in claim 1, wherein said central axis (C) and said longitudinal axis (L) are coaxial.

3. An exhaust assembly (20) as claimed in either of claims 1 or 2, wherein said valve body (50) includes an outer wall (68) extending between said inlet (54) and said first outlet (56) and further defining said passageway (52) with said outer wall (68) defining an aperture (70) fluidly connected to said passageway (52) and including an edge (72) further defining said aperture (70) wherein at least a portion of said edge (72) is angled relative to said central axis (C) towards said inlet (54) for further directing fluid through said second outlet (60).

4. An exhaust assembly (20) as claimed in claim 3 wherein said divider (58) extends along said edge (72) to further direct the fluid out said second outlet (60)

5. An exhaust assembly (20) as claimed in any one of claims 1 to 4, wherein said vane (74) is mounted to said divider.

6. An exhaust assembly (20) as claimed in any one of claims 1 to 5, wherein said divider (58) includes a first portion (62) mounted to said valve body (50) and extending angularly to said central axis (C) toward said inlet (54) and a second portion (64) mounted to said first portion (62) and extending into said passageway (52) substantially parallel to said central axis (C) to a distal end (66) with said vane (74) rotatably coupled to said distal end (66) about said pivot axis (P) transverse to said central axis (C).

7. An exhaust assembly (20) as claimed in any one of claims 1 to 6, wherein said housing (24) includes a first end (28) defining a first hole (30) and a second end (32) defining a second hole (34) spaced from each other along said longitudinal axis (L) with said valve body (50) disposed in said first hole (30) and mounted to said first end (28) and said bypass (40) cooperating with said second outlet (60) and said second hole (34) for directing the fluid from said second outlet (60) through said bypass (40) and out said second hole (34).

8. An exhaust assembly (20) as claimed in claim 7, wherein said valve body (50) is mounted to said body (38) of said internal treatment device (36) adjacent said opening (42) such that said opening (42) cooperates with said first outlet (56) of said valve body (50) for directing the fluid from said first outlet (56) through said opening (42) and out said second hole (34) of said second end (32).

9. An exhaust assembly (20) as claimed in either of claims 7 or 8, further including a downstream treatment device (80) mounted to said second end (32) adjacent said second hole (34) and spaced from said internal treatment device (36) with said downstream treatment device (80) including a casing (82) defining an orifice (84) along said longitudinal axis (L) for directing the fluid from said second hole (34) through said orifice (84) and out said orifice.

10. An exhaust assembly (20) as claimed in any one of claims 1 to 9 further including
a second exhaust assembly (96) for directing a fluid comprising
a second housing (98) defining a second cavity (100) along a second longitudinal axis (L');
at least one second internal treatment device (102) disposed in said second cavity (100) of said second housing (98);
a second valve body (104) mounted to said second housing (98) and coupled to said second internal treatment device (102) with said second valve body (104) defining a second passageway (106) along a second central axis (C') generally parallel with said second longitudinal axis (L')and having a second inlet (108) and a third outlet (110) spaced from each other relative to said second central axis (C') with said second passageway (106) extending between said second inlet (108) and said third outlet (110) and said third outlet (110) disposed in said second cavity (100) of said second housing (98);
a second divider (112) mounted to said second valve body (104) and extending into said second passageway (106) toward said second inlet (108) with said second divider (112) intersecting said second passageway (106) to define a fourth outlet (114) spaced from said second inlet (108) and said third outlet (110) relative to said second central axis (C') with said fourth outlet (114) disposed in said second cavity (100) of said second housing (98); and,
a second vane (116) coupled to said second valve body (104) and rotatable about a second pivot axis (P') between a third position blocking said fourth outlet (114) for directing the fluid through said third outlet (110) and a fourth position blocking said third outlet (110) for directing the fluid through said fourth outlet (114);
wherein said second valve body (104) of said second exhaust assembly (96) is coupled to one of said second end (32) of said exhaust assembly (20) and said downstream treatment device (80) of said exhaust assembly (20) for directing the fluid from said exhaust assembly (20) through said second exhaust assembly (96).

11. An exhaust assembly (20) as claimed in claim 1 wherein said internal treatment device (36) has an operating temperature range of from about 150C to about 400C to define a first range of operation;
the exhaust assembly further comprising at least one downstream treatment device (80) mounted to said housing (24) spaced from said valve body (50) and coupled to said second outlet (60) and said internal treatment device (36) with said downstream treatment device (80) having an operating temperature range of from about 300C to about 900C to define a second range of operation.

12. An exhaust assembly (20) as claimed in claim 11, wherein said internal treatment device (36) is a diesel oxidising catalyst and said downstream treatment device (80) is a three way catalyst with said vane (74) at said first position blocking said second outlet (60) for directing the fluid from said first outlet (56) through said diesel oxidising catalyst and out said three way catalyst wherein said exhaust assembly (20) is at said first range of operation.

13. An exhaust assembly (20) as claimed in claim 11, wherein said internal treatment device (36) is a diesel oxidising catalyst and said downstream treatment device (80) is a three way catalyst with said vane (74) at said second position blocking said first outlet (56) for directing the fluid from said second outlet (60) bypassing said diesel oxidising catalyst and out said three way catalyst wherein said exhaust assembly (20) is at said second range of operation.

## Patentansprüche

1. Abgasvorrichtung (20) zum Leiten eines Fluids, umfassend:
ein Gehäuse (24), das eine Kavität (26) entlang einer Längsachse (L) definiert;
wenigstens eine interne Behandlungsvorrichtung (36), die in der Kavität (26) des Gehäuses (24) angeordnet ist, wobei die interne Behandlungsvorrichtung (36) einen Körper (38) umfasst, der von dem Gehäuse (24) beabstandet ist, um einen Bypass-Kanal (40) zwischen dem Körper (38) und dem Gehäuse (24) zu definieren, wobei der Körper (38) eine Öffnung (42) entlang der Längsachse (L) definiert;
einen Ventilkörper (50), der an dem Gehäuse (24) angebracht ist und mit der internen Behandlungsvorrichtung (36) gekoppelt ist, wobei der Ventilkörper (50) einen Durchgang (52) entlang einer zentralen Achse (C) definiert, die im Wesentlichen parallel zu der Längsachse (L) verläuft, der einen Einlass (54) und einen ersten Auslass (56) aufweist, die relativ zu der zentralen Achse (C) voneinander beabstandet sind, wobei sich der Durchgang (52) zwischen dem Einlass (54) und dem ersten Auslass (56) erstreckt; und
ein Flügelrad (74), das um eine Drehachse (P) drehbar ist;
**dadurch gekennzeichnet, dass**
die Abgasvorrichtung ferner eine Trenneinrichtung (58) umfasst, die an dem Ventilkörper (50) angebracht ist und sich im Wesentlichen parallel zu der zentralen Achse (C) in den Durchgang in Richtung des Einlasses (54) erstreckt, wobei die Trenneinrichtung (58) den Durchgang (52) unterteilt, um einen zweiten Auslass (60) des Ventilkörpers (50) zu definieren, der relativ zu der zentralen Achse (C) von dem Einlass (54) und dem ersten Auslass (56) des Ventilkörpers (50) beabstandet ist, wobei der zweite Auslass (60) in der Kavität (26) des Gehäuses (24) angeordnet ist;
wobei das Flügelrad (74) an den Ventilkörper (50) gekoppelt ist und um die Drehachse (P) zwischen einer ersten Position, welche den zweiten Auslass (60) des Ventilkörpers (50) blockiert, um das Fluid durch den ersten Auslass (56) in die Öffnung (42) zu leiten, und einer zweiten Position drehbar ist, welche den ersten Auslass (56) des Ventilkörpers (50) blockiert, um das Fluid durch den zweiten Auslass (60) in den Bypass-Kanal (40) zu leiten;
wobei der erste Auslass (56) des Ventilkörpers (50) in der Kavität (26) des Gehäuses (24) angeordnet ist.

2. Abgasvorrichtung (20) nach Anspruch 1, wobei die zentrale Achse (C) und die Längsachse (L) koaxial sind.

3. Abgasvorrichtung (20) nach Anspruch 1 oder 2, wobei der Ventilkörper (50) eine Außenwand (68) umfasst, die sich zwischen dem Einlass (54) und dem ersten Auslass (56) erstreckt und ferner den Durchgang (52) definiert, wobei die Außenwand (68) eine Öffnung (70) definiert, die fluidisch mit dem Durchgang (52) verbunden ist und eine Kante (72) umfasst, die ferner die Öffnung (70) definiert, wobei wenigstens ein Abschnitt der Kante (72) relativ zu der zentralen Achse (C) in Richtung des Einlasses (54) gewinkelt ist, um weiter Fluid durch den zweiten Auslass (60) zu leiten.

4. Abgasvorrichtung (20) nach Anspruch 3, wobei die Trenneinrichtung (58) sich entlang der Kante (72) erstreckt, um das Fluid weiter aus dem zweiten Auslass (60) zu leiten.

5. Abgasvorrichtung (20) nach einem der Ansprüche 1 bis 4, wobei das Flügelrad (74) an die Trenneinrichtung angebracht ist.

6. Abgasvorrichtung (20) nach einem der Ansprüche 1 bis 5, wobei die Trenneinrichtung (58) einen ersten Abschnitt (62) umfasst, der an dem Ventilkörper (50) angebracht ist und sich winklig zu der zentralen Achse (C) in Richtung des Einlasses (54) erstreckt, sowie einen zweiten Abschnitt (64), der an den ersten Abschnitt (62) angebracht ist und der sich im Wesentlichen parallel zu der zentralen Achse (C) zu einem distalen Ende (66) in den Durchgang (52) erstreckt, wobei das Flügelrad (74) drehbar um die Drehachse (P) quer zu der zentralen Achse (C) an das distale Ende (66) gekoppelt ist.

7. Abgasvorrichtung (20) nach einem der Ansprüche 1 bis 6, wobei das Gehäuse (24) ein erstes Ende (28), das ein erstes Loch (30) definiert, und ein zweites Ende (32) umfasst, das ein zweites Loch (34) definiert, die entlang der Längsachse (L) voneinander beabstandet sind, wobei der Ventilkörper (50) in dem ersten Loch (30) angeordnet ist und an das erste Ende (28) angebracht ist und der Bypass (40) mit dem zweiten Auslass (60) und dem zweiten Loch (34) zusammenwirkt, um das Fluid von dem zweiten Auslass (60) durch den Bypass (40) und aus dem zweiten Loch (34) heraus zu leiten.

8. Abgasvorrichtung (20) nach Anspruch 7, wobei der Ventilkörper (50) angrenzend der Öffnung (42) derart an den Körper (38) der internen Behandlungsvorrichtung (36) angebracht ist, dass die Öffnung (42) mit dem ersten Auslass (56) des Ventilkörpers (50) zusammenwirkt, um das Fluid von dem ersten Auslass (56) durch die Öffnung (42) und aus dem zweiten Loch (34) des zweiten Endes (32) heraus zu leiten.

9. Abgasvorrichtung (20) nach Anspruch 7 oder 8, ferner umfassend eine stromabwärtsgelegene Behandlungsvorrichtung (80), die angrenzend an das zweite Loch (34) und beabstandet von der internen Behandlungsvorrichtung (36) an das zweite Ende (32) angebracht ist, wobei die stromabwärtsgelegene Behandlungsvorrichtung (80) eine Ummantelung (82) umfasst, die eine Öffnung (84) entlang der Längsachse (L) definiert, um das Fluid von dem zweiten Loch (34) durch die Öffnung (84) und aus der Öffnung heraus zu leiten.

10. Abgasvorrichtung (20) nach einem der Ansprüche 1 bis 9, ferner umfassend:
eine zweite Abgasvorrichtung (96) zum Leiten eines Fluids, umfassend:
ein zweites Gehäuse (98), das eine zweite Kavität (100) entlang einer zweiten Längsachse (L') definiert;
wenigstens eine zweite interne Behandlungsvorrichtung (102), die in der zweiten Kavität (100) des zweiten Gehäuses (98) angeordnet ist;
einen zweiten Ventilkörper (104), der an dem zweiten Gehäuse (98) angebracht ist und mit der zweiten internen Behandlungsvorrichtung (102) gekoppelt ist, wobei der zweite Ventilkörper (104) einen zweiten Durchgang (106) entlang einer zweiten zentralen Achse (C') definiert, die im Wesentlichen parallel zu der zweiten Längsachse (L') verläuft, der einen zweiten Einlass (108) und einen dritten Auslass (110) definiert, die relativ zu der zweiten zentralen Achse (C') voneinander beabstandet sind, wobei sich der zweite Durchgang (106) zwischen dem zweiten Einlass (108) und dem dritten Auslass (110) erstreckt und der dritte Auslass (110) in der zweiten Kavität (100) des zweiten Gehäuses (98) angeordnet ist;
eine zweite Trenneinrichtung (112), die an dem zweiten Ventilkörper (104) angebracht ist und sich in den zweiten Durchgang (106) in Richtung des zweiten Einlasses (108) erstreckt, wobei die zweite Trenneinrichtung (112) den zweiten Durchgang (106) unterteilt, um einen vierten Auslass (114) zu definieren, der relativ zu der zweiten zentralen Achse (C') von dem zweiten Einlass (108) und dem dritten Auslass (110) beabstandet ist, wobei der vierte Auslass (114) in der zweiten Kavität (100) des zweiten Gehäuses (98) angeordnet ist; und
ein zweites Flügelrad (116), das an den zweiten Ventilkörper (104) gekoppelt ist und um eine zweite Drehachse (P') zwischen einer dritten Position, welche den vierten Auslass (114) blockiert, um das Fluid durch den dritten Auslass (110) zu leiten, und einer vierten Position drehbar ist, welche den dritten Auslass (110) blockiert, um das Fluid durch den vierten Auslass (114) zu leiten;
wobei der zweite Ventilkörper (104) der zweiten Abgasvorrichtung (96) an das zweite Ende (32) der Abgasvorrichtung (20) oder die stromabwärtsgelegene Behandlungsvorrichtung (80) der Abgasvorrichtung (20) gekoppelt ist, um das Fluid von der Abgasvorrichtung (20) durch die zweite Abgasvorrichtung (96) zu leiten.

11. Abgasvorrichtung (20) nach Anspruch 1, wobei die interne Behandlungsvorrichtung (36) einen Betriebstemperaturbereich von ungefähr 150C bis ungefähr 400C aufweist, um einen ersten Betriebsbereich zu definieren, und wobei die Abgasvorrichtung (20) ferner wenigstens eine stromabwärts gelegene Behandlungsvorrichtung (80) umfasst, die beabstandet von dem Ventilkörper (50) an dem Gehäuse (24) angebracht ist und an den zweiten Auslass (60) und die interne Behandlungsvorrichtung (36) gekoppelt ist, wobei die stromabwärtsgelegene Behandlungsvorrichtung (80) einen Betriebstemperaturbereich von ungefähr 300C bis ungefähr 900C aufweist, um einen zweiten Betriebsbereich zu definieren.

12. Abgasvorrichtung (20) nach Anspruch 11, wobei die interne Behandlungsvorrichtung (36) ein dieseloxidierender Katalysator ist und die stromabwärtsgelegene Behandlungsvorrichtung (80) ein Dreiwegekatalysator ist, wobei das Flügelrad (74) in der ersten Position den zweiten Auslass (60) blockiert, um das Fluid von dem ersten Auslass (56) durch den dieseloxidierenden Katalysator und aus dem Dreiwegekatalysator heraus zu leiten, wobei die Abgasvorrichtung (20) in dem ersten Betriebsbereich ist.

13. Abgasvorrichtung (20) nach Anspruch 11, wobei die interne Behandlungsvorrichtung (36) ein dieseloxidierender Katalysator ist und die stromabwärtsgelegene Behandlungsvorrichtung (80) ein Dreiwegekatalysator ist, wobei das Flügelrad (74) in der zweiten Position den ersten Auslass (56) blockiert, um das Fluid von dem zweiten Auslass (60), ohne den dieseloxidierenden Katalysator zu passieren, und aus dem Dreiwegekatalysator heraus zu leiten, wobei die Abgasvorrichtung (20) in dem zweiten Betriebsbereich ist.

## Revendications

1. Ensemble d'échappement (20) pour diriger un fluide comprenant :
un logement (24) définissant une cavité (26) le long d'un axe longitudinal (L) ;
au moins un dispositif de traitement interne (36) disposé dans ladite cavité (26) dudit logement (24), le dispositif de traitement interne (36) comportant un corps (38) espacé dudit logement (24) pour définir un canal de déviation (40) entre ledit corps (38) et ledit logement (24), ledit corps (38) définissant une ouverture (42) le long dudit axe longitudinal (L) ;
un corps de valve (50) monté audit logement et couplé audit dispositif de traitement interne (36), ledit corps de valve définissant un conduit (52) le long d'un axe central (C) sensiblement parallèle audit axe longitudinal (L) et présentant une entrée (54) et une première sortie (56) espacées l'une de l'autre par rapport audit axe central (C), ledit conduit (52) s'étendant entre ladite entrée et ladite première sortie (56) ; et
une pale (74) pouvant tourner autour d'un axe de pivotement (P) ;
**caractérisé en ce que** :
l'ensemble d'échappement comprend en outre un séparateur (58) monté audit corps de valve (50) et s'étendant dans le conduit (52) de manière sensiblement parallèle à l'axe central (C) vers ladite entrée (54), ledit séparateur (58) venant en intersection dudit conduit (52) pour définir une deuxième sortie (60) dudit corps de valve espacée de ladite entrée (54) et de ladite première entrée (56) dudit corps de valve (50) par rapport audit axe central (C), ladite deuxième sortie (60) étant disposée dans ladite cavité (26) dudit logement (24) ;
ladite pale (74) est couplée audit corps de valve (50) et pouvant être mise en rotation autour de l'axe de pivotement (P) entre une première position fermant ladite deuxième sortie (60) dudit corps de valve (50) pour diriger le fluide à travers ladite première sortie (56) dans ladite ouverture (42), et une deuxième position fermant ladite première sortie (56) dudit corps de valve (50) pour diriger le fluide à travers ladite deuxième sortie (60) dans le canal de déviation (40) ;
ladite première sortie (56) dudit corps de valve est disposée dans ladite cavité (26) dudit logement (24).

2. Ensemble d'échappement (20) selon la revendication 1, dans lequel ledit axe central (C) et ledit axe longitudinal (L) sont disposés de manière coaxiale.

3. Ensemble d'échappement (20) selon l'une quelconque des revendications 1 ou 2, dans lequel ledit corps de valve (50) comporte une paroi extérieure (68) s'étendant entre ladite entrée (54) et ladite première première sortie (56), ledit conduit (52) étant en outre défini en ce que la paroi extérieure (68) définit un orifice (70) connecté en circulation de fluide audit conduit (52) et comportant un bord (72) qui définit en outre ledit orifice (70), dans lequel au moins une partie dudit bord (72) est orienté selon un angle par rapport audit axe central (C) vers ladite entrée (54) pour diriger encore plus du fluide à travers ladite deuxième sortie (60).

4. Ensemble d'échappement (20) selon la revendication 3, dans lequel ledit séparateur (58) s'étend le long dudit bord (72) pour diriger encore plus le fluide à travers ladite deuxième sortie (60).

5. Ensemble d'échappement (20) selon l'une quelconque des revendications 1 à 4, dans lequel ladite pale (74) est montée audit séparateur.

6. Ensemble d'échappement (20) selon l'une quelconque des revendications 1 à 5, dans lequel ledit séparateur (58) comporte une première partie (62) montée audit corps de valve (50) et s'étendant selon un angle par rapport audit axe central (C) vers ladite entrée (54) et une deuxième partie (64) montée à ladite première partie (62) et s'étendant dans ledit conduit (52) de manière sensiblement parallèle audit axe central (C) vers une extrémité distale (66), ladite pale (74) étant couplée en rotation à ladite extrémité distale (66) autour dudit axe de pivotement (P) et de manière transversale audit axe central (C).

7. Ensemble d'échappement (20) selon l'une quelconque des revendications 1 à 6, dans lequel ledit logement (24) comporte une première extrémité (28) définissant un premier orifice (30) et une deuxième extrémité (32) définissant un deuxième orifice (34) espacés l'un de l'autre le long dudit axe longitudinal (L), ledit corps de valve (50) étant disposé dans ledit premier orifice (30) et monté à ladite première extrémité (28), ladite déviation (40) coopérant avec ladite deuxième sortie (60) et ledit deuxième orifice (34) pour diriger le fluide depuis ladite deuxième sortie (60) à travers ladite déviation (40) et hors dudit deuxième orifice (34).

8. Ensemble d'échappement (20) selon la revendication 7, dans lequel ledit corps de valve (50) est monté audit corps (38) dudit dispositif de traitement interne (36) adjacent à ladite ouverture (42) de telle sorte que ladite ouverture (42) coopère avec ladite première sortie (56) dudit corps de valve (50) pour diriger le fluide depuis ladite première sortie (56) à travers ladite ouverture (42) et en dehors dudit deuxième orifice (34) de ladite deuxième extrémité (32).

9. Ensemble d'échappement (20) selon la revendication 7 ou la revendication 8, comportant en outre un dispositif de traitement en aval (80) monté à ladite deuxième extrémité (32) adjacent audit deuxième orifice (34) et espacé dudit dispositif de traitement interne (36), ledit dispositif de traitement en aval comportant une enveloppe (82) définissant un orifice (84) le long dudit axe longitudinal (L) pour diriger le fluide depuis ledit deuxième orifice à travers ledit orifice (84) et hors dudit orifice.

10. Ensemble d'échappement (20) selon l'une quelconque des revendications 1 à 9, comportant en outre :
un deuxième ensemble d'échappement (96) pour diriger un fluide comprenant :
un deuxième logement (98) définissant une deuxième cavité (100) le long d'un deuxième axe longitudinal (L') ;
au moins un deuxième dispositif de traitement interne (102) disposé à l'intérieur de ladite deuxième cavité (100) dudit deuxième logement (98) ;
un deuxième corps de valve (104) monté audit deuxième logement (98) et couplé audit deuxième dispositif de traitement interne (102), ledit deuxième corps de valve (104) définissant un deuxième conduit (106) le long d'un deuxième axe central (C') sensiblement parallèle audit deuxième axe longitudinal (L') et présentant une deuxième entrée (108) et une troisième sortie (110) espacées l'une de l'autre par rapport audit deuxième axe central (C'), ledit deuxième conduit (106) s'étendant entre ladite deuxième entrée (108) et ladite troisième sortie (110), ladite troisième sortie (110) étant disposée dans ladite deuxième cavité (100) dudit deuxième logement (98) ;
un deuxième séparateur (112) monté audit deuxième corps de valve (104) et s'étendant dans ledit deuxième conduit (106) vers ladite deuxième entrée (108), ledit deuxième séparateur (112) venant en intersection dudit deuxième conduit (106) pour définir une quatrième sortie (114) espacée de ladite deuxième entrée (108) et ladite troisième sortie (110) par rapport audit deuxième axe central (C'), ladite quatrième sortie étant disposée dans ladite deuxième cavité (100) dudit deuxième logement (98) ; et
une deuxième pale (116) couplée audit deuxième corps de valve (114) et pouvant être mise en rotation autour d'un deuxième axe de pivotement (P') entre une troisième position fermant ladite quatrième sortie (114) pour diriger du fluide à travers ladite troisième sortie (110) et une quatrième position fermant ladite troisième sortie (110) pour diriger le fluide à travers ladite quatrième sortie (114) ;
dans lequel ledit deuxième corps de valve (104) dudit deuxième ensemble d'échappement (96) est couplé à l'un parmi ladite deuxième extrémité (32) dudit ensemble d'échappement (20) et ledit dispositif de traitement en aval (80) dudit ensemble d'échappement (20) pour diriger le fluide depuis ledit ensemble d'échappement (20) à travers ledit deuxième ensemble d'échappement (96).

11. Ensemble d'échappement (20) selon la revendication 1, dans lequel ledit dispositif de traitement interne (36) présente une gamme de température de fonctionnement d'environ 150°C à environ 400°C, définissant ainsi une première gamme de fonctionnement ;
l'ensemble d'échappement comprenant en outre au moins un dispositif de traitement en aval (80) monté audit logement (24) espacé dudit corps de valve (50) et couplé à ladite deuxième sortie (60), ledit dispositif de traitement interne (36) et ledit dispositif de traitement en aval (80) présentant une gamme de température de fonctionnement entre environ 300°C et environ 900°C, définissant ainsi une deuxième gamme de fonctionnement.

12. Ensemble d'échappement (20) selon la revendication 11, dans lequel le dispositif de traitement interne (36) est un catalyseur oxydant de gasoil et ledit dispositif de traitement en aval (80) est un catalyseur à trois voies, ladite pale (74), en ladite première position, fermant ladite deuxième sortie (60) pour diriger le fluide depuis ladite première sortie (56) à travers ledit catalyseur oxydant de gasoil pour sortir dudit catalyseur à trois voies, dans lequel ledit ensemble d'échappement (20) fonctionne à ladite première gamme de fonctionnement.

13. Ensemble d'échappement (20) selon la revendication 11, dans lequel ledit dispositif de traitement interne (36) est un catalyseur oxydant de gasoil, et ledit dispositif de traitement en aval (80) est un catalyseur à trois voies, ladite pale, en ladite deuxième position, fermant ladite première sortie (56) pour diriger le fluide depuis ladite deuxième sortie (60) sur ladite déviation évitant ledit catalyseur oxydant de gasoil, pour sortir par ledit catalyseur à trois voies lorsque ledit ensemble d'échappement fonctionne à la deuxième gamme de fonctionnement.
